Europäisches Patentamt

(19) **European Patent Office**

Office européen des brevets

(11) Publication number : **0 198 324**
**B1**

(12) **EUROPEAN PATENT SPECIFICATION**

(45) Date of publication of patent specification :
09.08.89

(51) Int. Cl.⁴ : **F 16 C 33/78**

(21) Application number : **86104484.0**

(22) Date of filing : **02.04.86**

(54) **Sealing unit with a twin sealing shield.**

(30) Priority : **19.04.85 IT 5327685 U**

(43) Date of publication of application :
**22.10.86 Bulletin 86/43**

(45) Publication of the grant of the patent :
**09.08.89 Bulletin 89/32**

(84) Designated contracting states :
**DE FR GB SE**

(56) References cited :
EP--A-- 0 051 170
CH--A-- 381 927
GB--A-- 811 356
GB--A-- 2 130 310
US--A-- 2 941 825

(73) Proprietor : **RIV-SKF OFFICINE DI VILLAR PEROSA**
**S.p.A**
**Via Mazzini 53**
**I-10123 Torino (IT)**

(72) Inventor : **Colanzi, Franco**
**Piazza Rivoli, 6**
**I-10100 Torino (IT)**
Inventor : **Vignotto, Angelo**
**Via Montevideo, 6**
**I-10100 Torino (IT)**

(74) Representative : **Prato, Roberto et al**
**c/o Ingg. Carlo e Mario Torta Via Viotti 9**
**I-10121 Torino (IT)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a perfected sealing unit with a twin sealing shield, of the type described in EP-A-0 051 170.

In the aforementioned reference, of the same Applicant, a sealing unit with a twin sealing shield is described, the said unit having at least one sealing lip designed to exert sliding axial sealing action on a flange portion of one of the said shields and at least one sealing lip designed to exert sliding radial sealing action on a sleeve portion of the same shield.

The sealing unit described in the cited EP-A-0 051 170 results in a fairly good sealing action but involves relatively high production costs, is relatively bulky and, above all, produces in operation considerable friction.

The aim of the present invention is to provide a sealing unit of the known type described in EP-A-0 051 170, but provided for greater sealing efficiency than that afforded by the latter and/or similar sealing shields currently employed, while at the same time enabling reasonably low-cost production.

With this aim in view, according to the present invention, there is provided a sealing unit designed for insertion between two mutually-rotating members, particularly rolling bearings, and comprising a first rigid shield designed to fit onto one of the said members, and a second rigid shield designed to fit onto the other of the said members and provided, in integral manner, with an annular sealing member made of elastomeric material and designed to cooperate, in sliding manner, with at least one respective sliding track on the said first shield, for exerting axial sealing action on the said first shield, the said first shield comprising a radial flange portion bearing the said track and the said sealing member being arranged facing the said flange portion, characterized in that said radial flange portion is provided peripherally out- wards with an annular boss defining an annular concavity, on a front outer surface of the said first shield, and a corresponding annular convexity, on an inner surface of the said first shield defining the said track; in combination, said sealing member comprising an axial annular rib extending towards and perpendicular in relation to the said inner surface of the said first shield, but without touching the said inner surface, in such a manner as to define a supplementary axial labyrinth seal, the said rib being formed integral with the said sealing member between a projecting oblique radial annular lip of the said sealing member, said lip being designed to interfere with the said first shield for achieving the said sliding axial sealing action, and the said annular boss of the said first shield.

The present invention will be described by way of examples with reference to the accompanying drawings in which :

Fig. 1 shows a schematic cross section of a rolling bearing with a sealing unit according to the teachings of the present invention ;

Fig. 2 shows the Fig. 1 bearing with a modified version of the sealing unit according to the present invention.

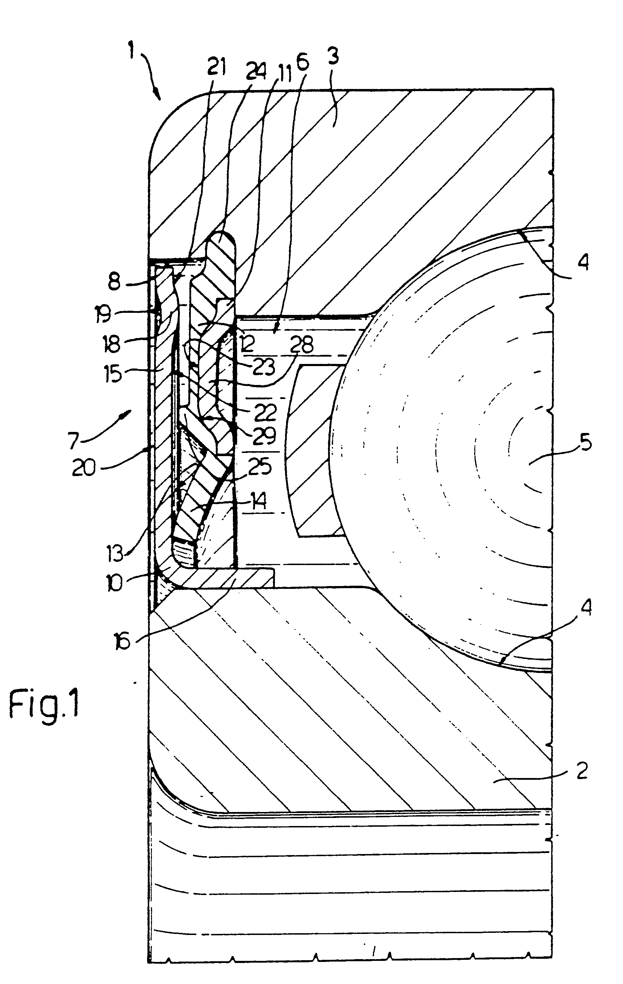

Number 1 in Fig. 1 indicates a rolling bearing of any known type, e. g. a ball bearing, comprising an inner ring 2, an outer ring 3, respective face-to-face raceways 4 formed on rings 2 and 3, and rolling bodies 5 rolling between raceways 4 in such a manner as to enable mutual rotation of rings 2 and 3. Rings 2 and 3 define an annular chamber 6 housing rolling bodies 5 and closed at its opposite ends (only one of which is shown for simplicity, bearing 1 being symmetrical) by respective sealing units 7 housed inside respective seats 8. Each sealing unit 7 comprises an outer shield 10 designed to fit integral with an operatively-rotating member, e. g. inner ring 2, and an inner shield 11 designed to fit integral with the other mutually-rotating member, e. g. outer ring 3, and fitted facing and beside the said outer shield 10. Both shields 10 and 11 are substantially rigid and preferably formed from pressed sheet metal. One of the said shields (shield 11 in the embodiment shown) is provided, in integral manner, with an annular sealing member 12 made of elastically-deformable elastomeric material, such as rubber, preferably secured to respective shield 11 by means of a known bonding process during curing. Sealing member 12 is designed to cooperate in sliding manner with a respective track 13 on shield 10, in such a way as to provide for sliding axial sealing between shields 10 and 11. For this purpose, the said sealing member 12 is provided, at the radially-inner edge of shield 11, with a projecting oblique radial annular lip 14 designed to interfere with shield 10, when unit 7 is operative, in such a way as to flex and exert on track 13 sufficient prearranged pressure for ensuring axial sealing.

In accordance with the present invention, track 13 is carried on a flange portion 15 of shield 10, said portion 15 being arranged facing sealing member 12 and extending perpendicularly in relation to a corresponding sleeve portion 16 of shield 10, said sleeve portion 16 being the means of fitting shield 10 onto ring 2. Flange portion 15 is provided peripherally outwards with an annular boss 18 defining a concavity 19 on a front outer surface 20 of shield 10, and a corresponding convexity 21 on an inner surface 22 of shield 10, opposite surface 20 and defining track 13. Facing surface 22, shield 11 presents a front face 23 entirely covered, by elastomeric member 12 which, starting from lip 14, extends over the whole of face 23 up to the outer edge of shield 11. The said elastomeric member 12 comprises a peripherally-outer annular appendix 24, opposite lip 14 and designed to click into seat 8 for securing shield 11 to ring 3, and an axial annular rib 25 projecting towards and perpendicularly in relation to surface 22, but without touching it. The said rib 25 is formed integral with member 12 between lip 14 and boss 18 of shield 10, and defines, together with surface 22, a supplementary axial labyrinth seal designed to protect sliding sealing lip 14. Shield 11 is preferably provided, along the centre line, with an annular strengthening boss 28 forming the convexity towards face 23 and having a radially-inner end 29 at which is formed rib 25. In accordance with the present invention, the free end of rib 25 lies substantially in the same plane passing through the top of convexity 21, as shown clearly in Fig. 1, in such a manner as to further improve the labyrinth sealing action exerted by rib 25.

Clearly, by virtue of shield 10 being fitted onto a rotating member and being the outermost shield on sealing unit 7, flange portion 15 acts as a centrifugal member for hurling away from chamber 6 any external contaminants coming into contact with shield 10. Tests conducted by the present Applicant have shown, however, that such centrifugal action is considerably improved, as compared with known sealing units, by the presence of boss 18, in that, concavity 19 sucks in and hurls the said contaminants centrifugally and obliquely away from shield 10 along a path enabling easy disposal, whereas corresponding convexity 21 prevents any remaining external contaminants from entering between shields 10 and 11, the said contaminants being collected in drops which are spun off and back onto outer surface 20 where they may be spun off by concavity 19. Finally, by virtue of rib 25 and its location flush with the top of convexity 21 defined by boss 18, any contaminant managing to get past boss 18 is arrested by member 12 and sucked, by virtue of mutual rotation, onto shield 10 ; at the same time leakage of any grease designed to lubricate lip 14 is prevented. Accordingly, simple, low-cost features, such as boss 18 and rib 25, when provided on a sealing unit even of known general structure enables a surprisingly big improvement to be obtained in sealing efficiency, in addition to prolonged working life of the sliding lip which is thus substantially untouched and unaffected by external contaminants.

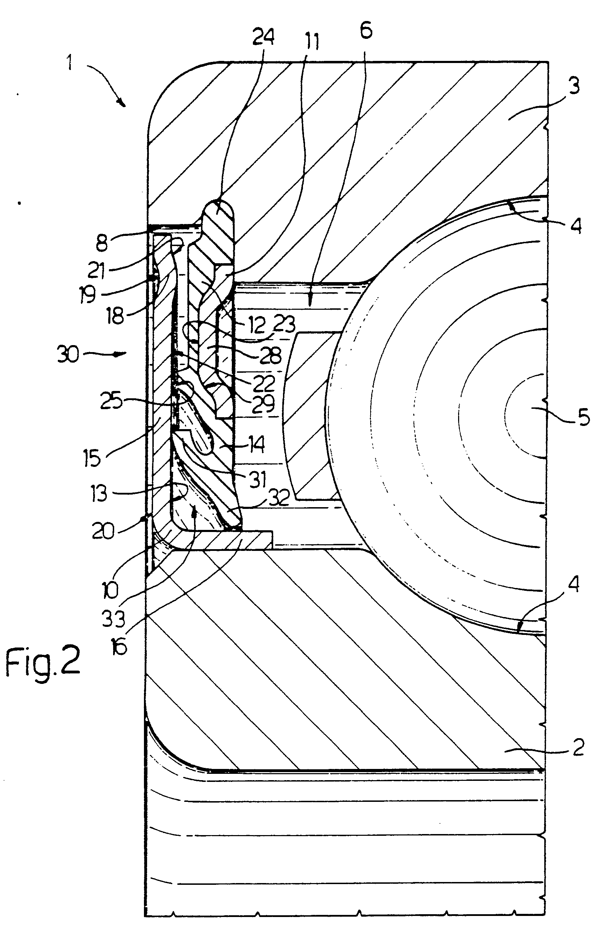

The bearing 1 shown in cross section in Fig. 2, and identical to that of Fig. 1, is provided with a sealing unit 30 constituting a possible variation of unit 7 as described above. For the sake of simplicity, details similar or identical to those already described are indicated using the same numbering system.

The only difference between sealing units 7 and 30 consists in the fact that radially-inner sealing lip 14 on unit 30 presents a substantially Y-shaped radial section and comprises a first end 31 extending obliquely and substantially axially towards shield 10 and cooperating, in use, with track 13 so as to define the required sliding axial seal, and a second end 32 extending obliquely and substantially radially towards sleeve 16 so as to cooperate, without sliding, with the said sleeve 16 and so define, together with shield 10, a supplementary radial labyrinth seal. In like manner, the sliding axial seal is enclosed between a double labyrinth seal defined by rib 25 with respective boss 18 and by end 32, with maximum protection of the sliding part of lip 14 and the formation of a chamber 33, between rib 25 and end 32, for housing a store of grease for lubricating the sliding parts. As for the rest, operation of sealing unit 30 is the same as for sealing unit 7, but with even better sealing performance by virtue of grease-filled chamber 33.

The advantages of the sealing unit according to the present invention will be clear from the foregoing description. To those skilled in the art it will also be clear that changes may be made to the invention as described herein without, however, departing from the scope of the same.

## Claims

1. A sealing unit designed for insertion between two mutually-rotating members, particularly rolling bearings, and comprising a first rigid shield (10) designed to fit onto one of the said members, and a second rigid shield (11) designed to fit onto the other of the said members and provided, in integral manner, with an annular sealing member (12) made of elastomeric material and designed to cooperate, in sliding manner, with at least one respective sliding track (13) on the said first shield (10), for exerting axial sealing action on the said first shield, the said first shield (10) comprising a radial flange portion (15) bearing the said track (13) and the said sealing member (12) being arranged facing the said flange portion (15) ; characterized in that said radial flange portion (15) is provided peripherally outwards with an annular boss (18) defining an annular concavity (19), on a front outer surface (20) of the said first shield (10), and a corresponding annular convexity (21), on an inner surface (22) of the said first shield (10) defining the said track (13) ; in combination, said sealing member (12) comprising an axial annular rib (25) extending towards and perpendicular in relation to the said inner surface (22) of the said first shield (10), but without touching the said inner surface (22), in such a manner as to define a supplementary axial labyrinth seal, the said rib (25) being formed integral with the said sealing member (12) between a projecting oblique radial annular lip (14) of the said sealing member (12), said lip (14) being designed to interfere with the said first shield (10) for achieving the said sliding axial sealing action, and the said annular boss (18) of the said first shield (10).

2. A sealing unit as claimed in Claim 1, characterized by the fact that the said elastomeric sealing member (12) extends over an entire front face of the said second shield (11), facing the said inner surface (22) of the said first shield (10), and comprises a peripherally-outer annular appendix (24), opposite the said lip (14), designed to click inside a seat (8) on one of the said members, for securing to the said member the said second shield (11).

3. A sealing unit as claimed in Claim 1 or 2, characterized by the fact that the said second shield (11) is provided along its centre line with an annular strengthening boss (28) at a radially-inner end of which is formed the said axial annular rib (25).

4. A sealing unit as claimed in anyone of the foregoing Claims, characterized by the fact that the said oblique radial annular lip (14) presents a substantially Y-shaped radial section, a first end (31) of the said lip cooperating, in sliding manner, with the said track (13) so as to define the said axial seal, and a second end (32) of the said lip cooperating with a sleeve portion (16) of the said first shield (10) so as to define, with the same, a non-sliding radial seal designed to enclose the said sliding axial seal, formed by the said first end (31), between a double labyrinth seal defined by the said annular rib (25) and by the said second end (32) of the said oblique lip (14).

5. A sealing unit as claimed in anyone of the foregoing Claims, characterized by the fact that the free end of the said axial annular rib (25) lies substantially in the same plane passing through the top of the said convexity (21) defined by the said annular boss (18) on the said inner surface (22) of the said first shield (10).

**Patentansprüche**

1. Kupplungsvorrichtung, so konstruiert, daß sie zwischen zwei gegeneinanderdrehende Teile eingefügt werden kann, konkret zwischen Kugellager, bestehend aus einem ersteren steifen Schirm (10), so konstruiert, daß er mit einem der besagten Teile verbunden werden kann, und einem zweiten steifen Schirm (11), so konstruiert, daß er mit dem anderen der besagten Teile verbunden werden kann und vollständig mit einem ringförmigen Kupplungsteil (12) versehen, das aus Elastomermaterial besteht und so konstruiert ist, daß es, in gleitender Weise, mit mindestens einer der entsprechenden Gleitschienen (13), die sich auf dem ersteren besagten Schirm befinden (10), zusammenarbeitet, um eine axiale Gleitbewegung auf dem ersteren besagten Schirm auszuführen, der erstere besagte Schirm (10) besteht aus einem radialen Flansch (15), der besagte Schiene (13) stützt und ebenso besagtes Kupplungsteil (12), das gegenüber besagtem Flansch (15) montiert ist; dadurch gekennzeichnet, daß besagter radialer Flansch (15) an seiner äußeren Peripherie mit einer ringförmigen Nabe (18) versehen ist, die eine ringförmige Vertiefung (19) bildet, auf einer vorderen äußeren Oberfläche (20) des besagten ersteren Schirmes (10), und einer entsprechenden ringförmigen Wölbung (21), auf einer inneren Oberfläche (22) des besagten ersteren Schirmes (10) und damit besagte Schiene (13) bildend; in Verbindung besteht besagtes Kupplungsteil (12) aus einer axialen ringförmigen Pleuelstange (25), die sich in Richtung und im Verhältnis zu besagter innerer Oberfläche (22) des besagten ersteren Schirmes (10) in senkrechter Position befindet, die jedoch nicht die innere Oberfläche (22) berührt, in der Art, daß sie eine zusätzliche axiale labyrinthische Kupplung bildet, besagte Pleuelstange (25) bildet eine Einheit mit besagtem Kupplungsteil (12) zwischen einem radialen ringförmigen Rand (14), der in die obligatorische Richtung übersteht und Teil des besagten Kupplungsteiles (12) ist; besagter Rand (14) ist so konstruiert, daß er mit besagtem ersteren Schirm (10) zusammenarbeitet, um die besagte gleitende axiale Kupplungsbewegung auszuführen und besagte ringförmige Nabe (18) am besagten ersteren Schirm (10) zu erreichen.

2. Kupplungsvorrichtung nach Anspruch 1, dadurch gekennzeichnet, daß besagtes, aus Elastomermaterial bestehendes Kupplungsteil (12) sich über die gesamte Vorderseite des besagten zweiteren Schirmes (11) ausdehnt, gegenüber besagter innerer Oberfläche (22) des besagten ersteren Schirmes (10), bestehend aus einem äußeren peripheren Endstück (24), das sich gegenüber des besagten Randes (14) befindet, so konstruiert, daß es innerhalb eines Gehäuses (8) in eines der besagten Teile einrastet, um damit den besagten zweiteren Schirm (11) an dem besagten Teil zu sichern.

3. Kupplungsvorrichtung nach Anspruch 1 oder 2, dadurch gekennzeichnet, daß besagter zweiterer Schirm (11) entlang seiner zentralen Linie mit einer ringförmigen Verstärkungsnabe (28) versehen ist, die sich an einem radialen inneren Endstück befindet und das besagte axiale ringförmige Pleuelstange (25) bildet.

4. Kupplungsvorrichtung nach einem der vorangegangenen Ansprüche, dadurch gekennzeichnet, daß besagter radialer, ringförmiger, in die obligatorische Richtung überstehender Rand (14) eine grundsätzlich Y-förmige radiale Sektion darstellt, ein ersteres Ende (31) des besagten Randes arbeitet in gleitender Weise mit besagter Schiene (13) zusammen und definiert damit die besagte axiale Kupplung, ein zweiteres Ende (32) des besagten Randes arbeitet mit einer Muffe (16) des besagten ersteren Schirmes (10) zusammen, um mit demselben eine nicht-gleitende radiale Kupplung zu formen, so konstruiert, daß sie besagte axiale gleitende Kupplung umschließt, gebildet durch das besagte erstere Ende (31), zwischen einer doppelten labyrinthischen Kupplung, geformt durch besagte ringförmige Pleuelstange (25) und durch besagtes zweitere Ende (32) des besagten obligatorischen Randes (14).

5. Kupplungsvorrichtung nach einem der vorangegangenen Ansprüche, dadurch gekennzeichnet, daß das freie Ende der besagten axialen ringförmigen Pleuelstange (25) grundsätzlich auf derselben Höhe liegt, auf der sich auch der Höhepunkt der besagten Wölbung (21) befindet, gebildet durch besagte ringförmige Nabe (18) auf besagter innerer Oberfläche (22) des besagten ersteren Schirmes (10).

## Revendications

1. Unité d'étanchéité prévue pour être insérée entre deux organes en rotation mutuelle, en particulier des roulements à billes, et comprenant un premier bouclier rigide (10) prévu pour s'adapter sur l'un desdits organes, et un second bouclier rigide (11) prévu pour s'adapter sur le second desdits organes et pourvu d'un élément d'étanchéité annulaire d'une seule pièce (12) réalisé en matériau élastomère et prévu pour coopérer de manière à coulisser avec une piste de coulissement correspondante (13) au moins, sur ledit premier bouclier (10), pour exercer une action d'étanchéité axiale sur ledit premier bouclier, ledit premier bouclier (10) comprenant une partie en forme de flanc radial (15) portant ladite piste (13) et ledit élément d'étanchéité (12) étant disposé pour faire face à ladite partie en forme de flanc (15) ; caractérisée en ce que ladite partie en forme de flanc radial (15) est pourvue périphériquement, vers l'extérieur, d'un bossage annulaire (18) définissant une concavité annulaire (19) sur une surface extérieure frontale (20) dudit premier bouclier (10) et une convexité annulaire correspondante (21) sur une surface annulaire intérieure (22) dudit premier bouclier (10), définissant ladite piste (13) ; en combinaison, ledit élément d'étanchéité (12) comprenant une nervure annulaire axiale (25) s'étendant en direction et perpendiculairement à ladite surface intérieure (22) dudit premier bouclier (10), mais sans toucher ladite surface intérieure (22), de manière à définir un joint à labyrinthe axial supplémentaire, ladite nervure (25) étant formée d'une seule pièce avec ledit élément d'étanchéité (12), entre une lèvre annulaire radiale en saillie oblique (14) dudit élément d'étanchéité (12), ladite lèvre (14) étant prévue pour venir en contact avec ledit premier bouclier (10) pour réaliser ladite action d'étanchéité par coulissement axial, et ledit bossage annulaire (18) dudit premier bouclier (10).

2. Unité d'étanchéité selon la revendication 1, caractérisée en ce que ledit élément d'étanchéité en élastomère (12) s'étend sur une surface frontale entière dudit second bouclier (11) faisant face à ladite surface intérieure (22) dudit premier bouclier (10) et comprend un appendice annulaire extérieur périphérique (24) en regard de ladite lèvre (14), prévu pour s'enclencher dans un siège (8) de l'un desdits éléments, pour fixer ledit élément audit second bouclier (11).

3. Unité d'étanchéité selon la revendication 1 ou 2, caractérisée en ce que ledit second bouclier (11) est pourvu, sur son axe central, d'un bossage de renforcement annulaire (28) à une extrémité intérieure radiale duquel est ménagée ladite nervure annulaire axiale (25).

4. Unité d'étanchéité selon l'une quelconque des précédentes revendications, caractérisée en ce que ladite lèvre annulaire radiale oblique (14) présente une section radiale sensiblement en forme de Y, une première extrémité (31) de ladite lèvre coopérant, de manière à coulisser avec ladite piste (13) de façon à définir ledit joint axial, et une seconde extrémité (32) de ladite lèvre coopérant avec une partie en forme de manchon (16) dudit premier bouclier (10) afin de définir, avec celui-ci, un joint radial non coulissant, prévu pour enfermer ledit joint axial coulissant, formé par ladite première extrémité (31) entre un joint à double labyrinthe défini par ladite nervure annulaire (25) et ladite seconde extrémité (32) de ladite lèvre oblique (14).

5. Unité d'étanchéité selon l'une quelconque des précédentes revendications, caractérisée en ce que l'extrémité libre de ladite nervure annulaire axiale (25) est située sensiblement dans le même plan passant par le sommet de ladite convexité (21) définie par ledit bossage annulaire (18) sur ladite surface intérieure (22) dudit premier bouclier (10).

Fig.1

Fig.2